# EUROPEAN PATENT APPLICATION

(11) **EP 2 527 587 A2**
(43) Date of publication of application: **28.11.2012**
(21) Application number: 12166658.0
(22) Date of filing: 03.05.2012
(51) Int. Cl.: E21B 41/00, E21B 44/00, E21B 47/12

(54) **Reservoir evaluation system**

(30) Priority: 26.05.2011 US 201113116268
(71) Applicant: Precision Energy Services, Inc., Fort Worth, TX 76126 (US)
(72) Inventor: Waid, Margaret C., Houston, TX Texas 77066-2347 (US); Kasperski, Bryan, Carrollton, TX Texas 75010 (US)
(74) Representative: Gee, Steven William

(57) **Abstract**

A reservoir evaluation system (100) enables end users (200) to plan jobs for performing formation tests at remote wellsites. In the planning, the end user defines the toolstring to be constructed at the remote wellsite by service personnel and defines the details for the formation tests to performed with the toolstring. While the tests are performed, the system (150) obtains data via a satellite (140) or other communication link with the remote wellsite (110) and stores the data for retrieval and processing. The data measured from the formation tests conducted with the toolstring can be obtained in real time from the wellsite. The system processes the obtained data to produce analysis for the end user, who can then remotely access the data and analysis with a secure network connection (190) via the Internet or the like.

## Description

### BACKGROUND

Wells are drilled in an earth formation to extract gas, water, and/or hydrocarbons from a reservoir. To know where to drill the wells and extract the fluids, operators can use seismic data, test wells, well logs, and other techniques available in the art. In general, the reservoir can be viewed as a large pressure network of various layers. Knowing the distribution of layers, fluids, and pressures in a reservoir can be very beneficial for operators as they plan and perform production operations in various wells in the reservoir.

Once a well has been drilled and logged, a number of tests can be performed on the well's surrounding formations at various depths so operators can determine how to perform production operations. Typically, service providers who provide formation testing have service centers where customers can go to monitor formation testing jobs at remote wellsites. Although these service centers offer analysis for the customers, customers can only use the resources while at the centers using local machines, data, algorithms, and the like. This can be inconvenient for customers who have multiple wellsites and various personnel involved in all aspects of the operations.

The subject matter of the present disclosure is directed to overcoming, or at least reducing the effects of, one or more of the problems set forth above.

### SUMMARY

A reservoir evaluation system enables end users (*i.e.*, customers of a formation testing service) to plan formation test jobs at remote wellsites. To plan a job, the end user defines the components of the toolstring to be constructed at the remote wellsite by the service provider's personnel. The end user also defines the details for the formation tests to be performed with the toolstring. To do this, the end user access a number of job planning screens of a graphical user interface of a central server system.

While the tests are performed by the service personnel at the wellsite, data is measured from the formation tests conducted with the toolstring, and the central server system obtains the data in real time. Communication between the wellsite and the central server system can be via a satellite or other communication link. When the data is received, the central server system stores the data for retrieval and processing. In particular, the system processes the data to produce analysis for the end user, who can then remotely access the data and analysis with a secure network connection via the Internet or the like.

The foregoing summary is not intended to summarize each potential embodiment or every aspect of the present disclosure.

### BRIEF DESCRIPTION OF THE DRAWINGS

Figs. 1A-1 B illustrate components of a reservoir evaluation system according to the present disclosure.

Fig. 2A shows further details of the reservoir evaluation system primarily directed to the real-time data acquisition of the system.

Fig. 2B shows further details of the reservoir evaluation system primarily directed to the data acquisition and processing at a server-side of the system.

Fig. 3 diagrams various functions associated with the reservoir evaluation system.

Fig. 4 is a flow chart of a process of using the reservoir evaluation system.

Figs. 5A-5B show examples of graphical user interface screens for an end user to plan a job with the reservoir evaluation system.

Fig. 6 diagrams various data structures for the reservoir evaluation system.

Fig. 7 shows an example permission hierarchy of the reservoir evaluation system for describing access permission of end users.

### DETAILED DESCRIPTION

### A. System Overview

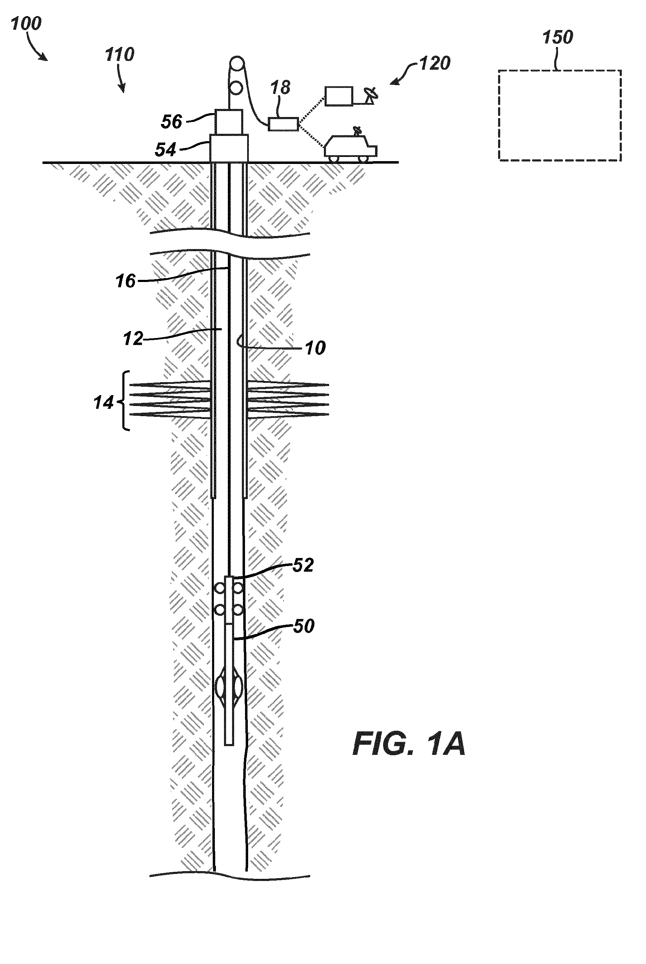

Figures 1A-1 B illustrate components of a reservoir evaluation system 100 according to the present disclosure. The components of the system 100 reside in two principal locations: a remote location at a wellsite and a centralized location at one or more data centers. A data acquisition unit 110 used at the remote location of the wellsite measures data of a formation in a reservoir and transmits that data to an access system 150 at the one or more data centers. Satellite or other forms of communications can provide the link between these two locations, such as wireless, wired, or physical delivery links for the data. Although described as centralized, the access system 150 is not necessarily at one location. Instead, various features and components of the access system 150 can be distributed via networks at various locations, servers, databases, and the like.

While data is being obtained and transmitted, remote users located remotely from the data acquisition unit 110 and the access system 110 can access the system 150 to review, process, and analyze the data obtained. Additionally, the remote users can communicate with the data acquisition unit 110 to direct or control aspects of the data being measured at the wellsite.

Referring to the data acquisition unit 110 shown in Figure 1A, a downhole evaluation tool 50 deploys in a well 10 to analyze the formation. In general, the tool 50 can be any suitable tool used for wireline formation testing, production logging, Logging While Drilling/Measurement While Drilling (LWD/MWD), Formation Testing While Drilling (FTWD), etc. As such, the tool 50 can be any suitable formation tester tool deployed by wireline, drill string, drill collar, etc.

As a wireline tool, the tool 50 can be conveyed by a wireline 16, which in turn can be used for communication purposes. However, the tool 50 could be deployed in the well 10 and left in place without the wireline 16 connected, in which case memory on the tool 50 may record the desired measurements. If the well 10 has a horizontal section, the tool 50 can also be assisted by a non-gravity assisted conveyance 52.

With the tool 50 deployed downhole to make measurements of the formation, the tool 50 can measure perturbations or changes in the formation's pressure, detect properties of the formation fluids, and perform other known measurements and tests. At the surface, a cable clamp 54 and seal mechanism 56 can hold the wireline 16, and a local data acquisition unit 110 at the well 10 acquires data and transmits it for processing. To do this, the local data acquisition unit 110 uses communication equipment to acquire data from the downhole tool 50 in real-time and sends out the data in real-time using satellite, wireless, wired, or any other known technology. For example, the local data acquisition unit 110 can be a mobile logging unit or truck 120 that connects by a quick connect 18 to the wireline 16 to obtain the data in real-time. Alternatively, the local data acquisition unit 110 can be a logging skid or remote data unit 125 connected to the wireline 16. In either case, the local data acquisition unit 110 sends real-time data transmissions of the formation measurements to the access system 150, which has its own data processing capabilities and equipment, such as computers, databases, user interfaces, and the like as discussed in more detail below.

The processing equipment at the access system 150 communicatively couples to the communication equipment of the local data acquisition unit 110 and receives the data to be processed. The received data can generally include time-series measurements, depth-series measurements, station depths, start and end times of tests, kinds of tests, results, and similar engineering data. The received data can also include client information, user information, job planning data, and job workflow data, as well as other suitable data as detailed herein.

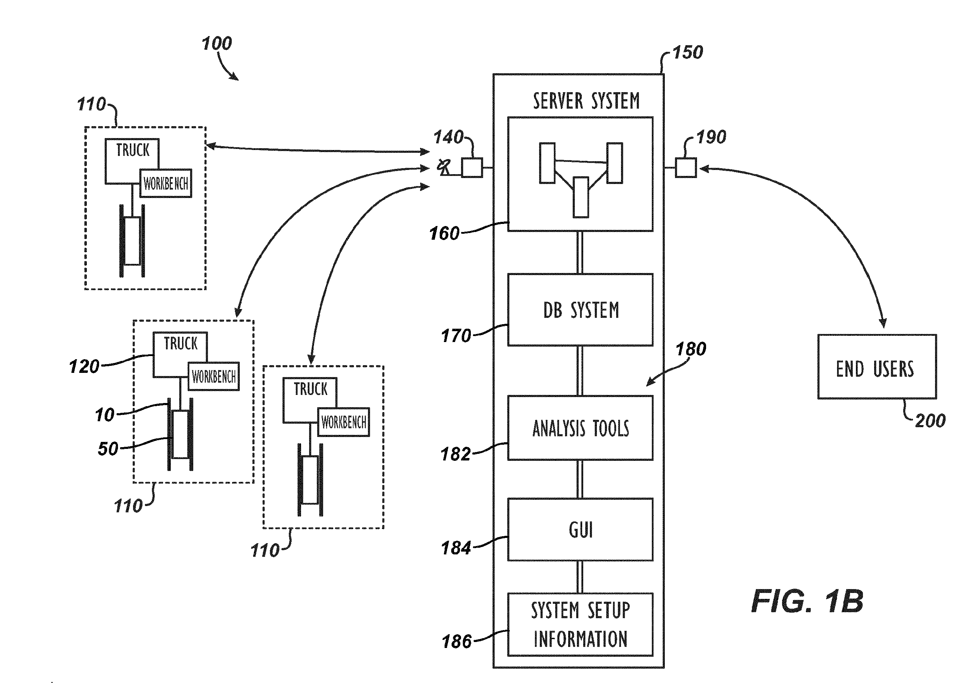

Turning now to Figure 1 B showing the access system 150 in more detail, the access system 150 can communicate with a number of local data acquisition units 110 at the same time. These units 110 can be distributed at various wellsites around the world and can be associated with a number of different jobs, companies, end users, projects, and the like. As noted previously, various forms of communication can be used between the access system 150 and these local units 110, including, but not limited to, satellite links, wired or wireless links, physical downloads, etc. As shown in Figure 1 B, the access system 150 has satellite communication equipment 140 for communicating in real-time with the local acquisition units 110.

As generally shown in Figure 1 B, the access system 150 has a server system 160, a database system 170, and a software system 180. Briefly, the server system 160 has a plurality of servers, which can include dedicated servers and virtual servers for the various components, and the database system 170 has a plurality of databases for storing and retrieving data.

The software system 180 includes analysis tools 182, graphical user interfaces 184, and system setup information 186. As explained in more detail later, the graphical user interfaces 184 allow remote end users 200 to use the analysis tools 182 to plan, view, process, and analyze the jobs and data for the wells 10. Meanwhile, the system setup information 186 controls which users have access to certain data, how data is shared between users and groups, and other data protection features.

Comparable to the communication equipment 140 for communicating with the local data acquisition units 110, the access system 150 has communication equipment 190 for communicating with computer systems of the end users, who can be customers, data services, analysts, support personnel, etc. Again, various forms of communication can be used, although web-based communication may be preferred.

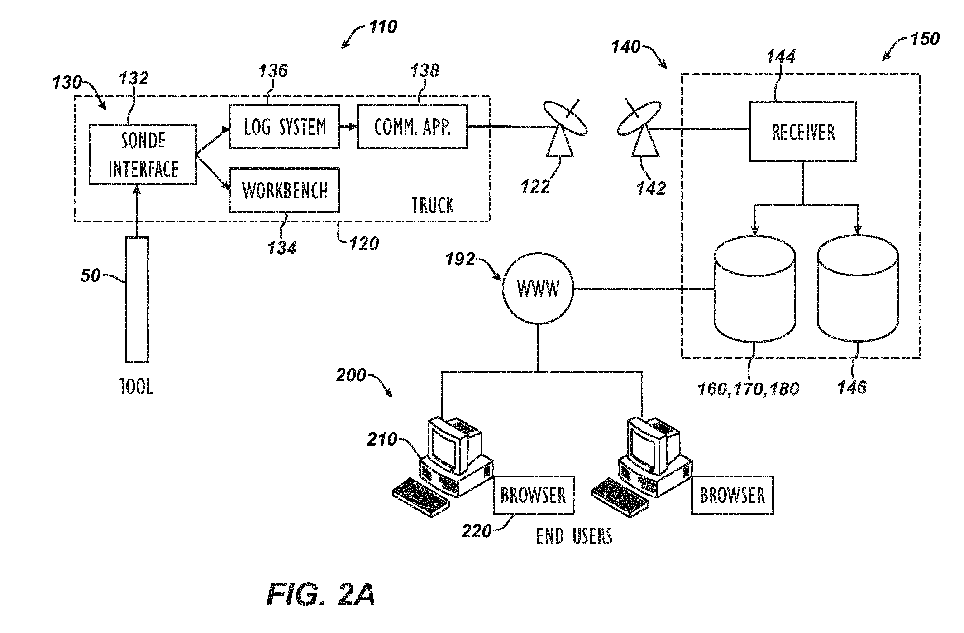

More details of the local data acquisition unit 110 and the access system 150 will now be discussed with reference to Figures 2A-2B.

### B. System Architecture

Figure 2A shows further details of the reservoir evaluation system 100 with primary emphasis on components used in the real-time data acquisition. As shown, the local data acquisition unit 110, which can use a truck 120 or the like, has surface acquisition equipment 130. The downhole evaluation tool 50 transmits data up the wireline cable 16 to the surface acquisition equipment 130 in the truck 120, where a sonde interface 132 converts the telemetred data into engineering data. This converted data is then recorded into log files by a logging system 136, such as Window's Logging System (WLS). Such a logging system 136 also manages the collection of log files and ancillary data such as well data.

A control application 134, such as a workbench software available from Weatherford International, Ltd., is used to control the downhole tool 50, display the data acquired, and perform some preliminary processing. Results from the control application's processing are written to data files, and a communication application 138 then transmits either the full files (for a completed job, as a batch after the job completes), or transmits elements of the data (in real time during a job) through an appropriate communication channel, such as by satellite 122.

At the access system 150, the communication equipment 140 receives the data. For the data transmitted in real time via satellite, the communication equipment 140 can include satellites 142 and receivers 144. In the case of completed jobs, the data files can be parsed and loaded into applications of the access system 150. In the case of real time jobs, the elements of data are received by the access system's receiver 144 for handling.

During or after the job, the data can be routed to a preview application 146 for displaying raw or preliminary details of the data before significant processing and analysis. One suitable example for the application 146 is the PreView software program available from Weatherford International, Ltd. This software program works with a number of file formats, including DPK, PBMGZ, PPMGZ and TIFF files, so users can create Log ASCII Standard (LAS) files and can create plots for on-screen viewing and printing.

Using the preview application 146, data taken at the surface (which may or may not be in real time) can be transmitted via satellite, broadband, or other link 147 from the access system 150 to designated end users. In turn, the end users can then receive bare log data remotely, using computers, cell phones, etc. This form of previewing can also involve videoconferencing between participants and sending of logging details.

Also at the access system 150, the server system 160, database system 170, and software system 180 can handle the acquired data and make it available to end users in additional ways. For example, the server system 160 uses web-based software applications so end users 200 can access the functionality of the server system 160 using an interactive web site. The server system 160 hosts the web applications, and remote users 200 access the applications through an Internet or other network interface 192. In this way, the end users 200, such as customers, geoscientists, support personnel, data providers and the like, can use their own remote computer systems 210 and browsers 220 to communicate with the access system 150 to view, process, and analyze the acquired data.

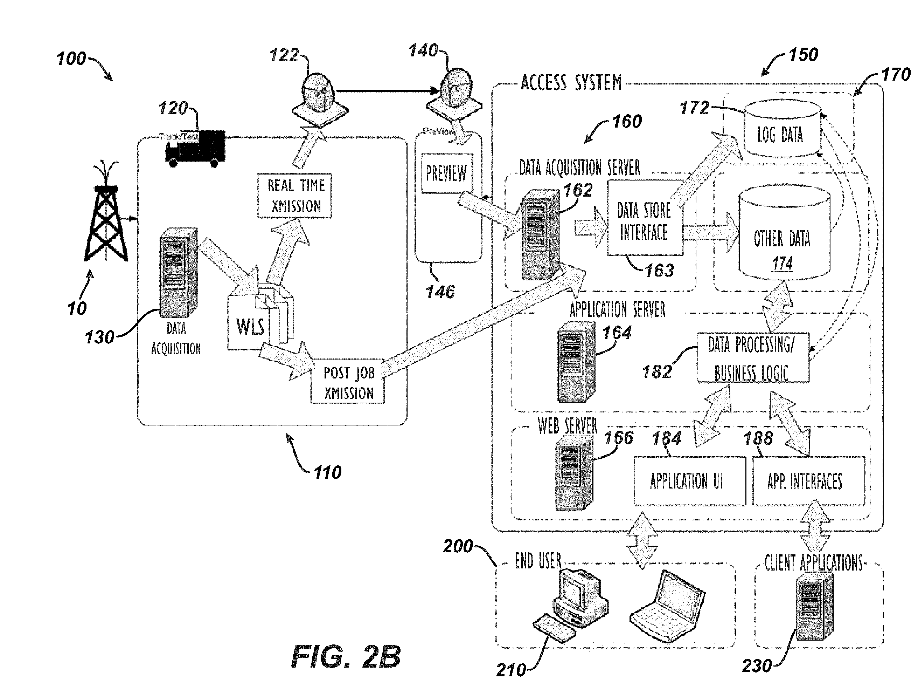

With an understanding of the data acquisition features, we now turn to Figure 2B, which shows further details of the reservoir evaluation system 100 primarily directed to the data acquisition and processing at the access system 150. As noted previously and briefly repeated here, the local data acquisition unit 110 has surface acquisition equipment 130, which can include a server or other computer system for acquiring real-time data from the well 10 and evaluation tools 50. Data can then be transmitted in real time from the unit 110 via satellite 122, although other forms of data transfer can be used. For example, post job transmission can be made using other protocols not directly amenable to real-time transmission with remote locations. These transmissions can use file transfer protocol (ftp), manual loading of the data set of a completed job, or other forms of data transfer.

As noted previously, formation testing service providers typically have centers where customers go to watch and monitor a formation testing job. These service centers offer analysis for the customers, but the analysis is only provided at the center using the center's local machines, data, algorithms and the like. In contrast to such a centralized arrangement, the disclosed system 100 allows end user to access the system 150, which has servers, databases, and other resources where log data can be viewed and analyzed remotely via the Internet or other network.

The end users 200 use secure log-ins from their local machines 210 to the access system 150. At that point, the end users 200 can observe the formation testing job in real-time, and all the specialists involved in the operation can also interact with the job even though they are at different locations. In this way, the end users 200 can interactively communicate with the access system 150, but the end users 200 do not need to download any data to their local machines 210 to perform analysis. Instead, the end users 200 can use the system 150 to analyze the data remotely without having to go to an established center or use local machines to perform complex computations.

Turning specifically to the access system 150, the satellite 142 and preview application 146 acquire the transmitted data for the remote wellsite as described previously. A data acquisition server 162 running a data store interface 163 then loads the acquired data into a log database 172 and other databases 174 of the database system 170. In particular, the data acquisition server 162 includes a loader component (not shown) that handles the stream of real time data coming from the communication equipment 140 and feeds the data into the data store interface 163. Alternatively, completed jobs having static data in appropriate formats can be parsed and processed directly by the data store interface 163.

Thereafter, the data store interface 163 treats either kind of data (real time or static) identically and proceeds to store the data in one of two databases 172 or 174. Specifically, log data is stored in the log data database 172. This log data can include the time-series or depth-series data channel files from the remote tool 50, plus contextual data such as station depths, start and end times of tests, kinds of tests, results, and similar engineering data. Other job data, such as client and user information, job planning data, and job workflow data, is stored in another internal database 174. In one preferred arrangement, the log data database 172 can uses the WITSML standard for data access, and a WITSML/PRODML data model can be used as the standard for the log data from the formation tester tool 50. Wellsite Information Transfer Standard Markup Language (WITSML) is an industry standard interface for monitoring and managing wells, completions, and workovers. Production Markup Language (PRODML) is an industry standard interface for software tools to monitor and manage hydrocarbon production.

At another layer of the server system 160, an application server 164 running processing applications 182 accesses the log data in the database system 172. These processing applications 182 include data processing and business logic software that performs desired processing and analysis of the data as detailed herein. In the analysis, the processing applications 182 can also bring in logs and data from other sources. The analysis performed can involve, but is not limited to, analyzing the radial formation buildup obtained with a sampler, various pressures obtained, flow rates, pressure gradients, fluid contacts, permeability profiles, fluid properties, fluid compositions, bubble points, etc. The system 150 can also import information from the local data acquisition unit 110, including gradient result, radial flow analysis, and the like.

At another layer of the server system 160, a communication server 166 provides an interface between the end users 200 and the application server 164 and its processing and analysis features. In this way, the application server 164 can be accessed and used remotely by the end users 200 to make analyzed data available for the end users' purposes. Preferably, access by the end users 200 to the access system 150 is via the Internet. Accordingly, the communication server 166 is preferably a web server having an application user interface 184 and application interfaces 188. The application user interface 184 interfaces with the end users' computers 210, while the application interfaces 188 interface with client applications on remote servers 230. Because the communication server 166 uses web-based applications, the system 150 does not require a particular distribution channel for end user downloads, which are not necessary with the access system 150.

Overall, then, data flows from the remote jobs at the various wells 10 into the access system 150. The data acquisition server 162 handles the acquired data. The business logic of the processing applications 182 generates data and display objects for end user's web pages-all of which are created on demand. The web server 166 then uses the user interface applications 184 to serve web pages to the end user over the Internet or some other network. As an alternative, access to data can be made via the application interfaces 186, which may be primarily WITSML/PRODML based.

### C. System Functions

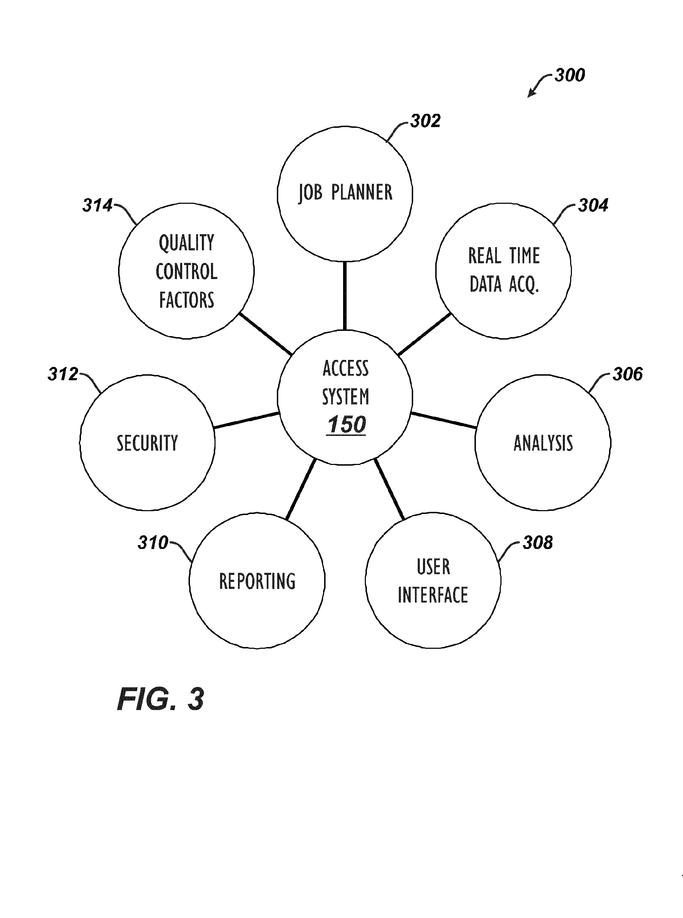

Figure 3 diagrams various functions 300 associated with the access system 150 for end users to acquire, view, and analyze data of tests at remote wellsites. These functions 300 are described in conjunction with the components of Figures 2A-2B for reference. As part of the access system 150, end users have access to a job planner function 302 via the server and software systems (160 and 170). The job planner function 302 provides various user interfaces for the end users 200 to plan and execute formation testing jobs at wellsites. Details of the job planner function 302 are described later.

As another part, the access system 150 has real time data handling features 304, such as those discussed previously. These features 304 automatically handle, store, and organize real time data communicated from the jobs so that end users can have access to the obtained data. Using the obtained data, end users can then use the various user interface features 308 of the system 150 to access various analysis tools 306 for processing and analyzing the data. These analysis tools 306 can use known software algorithms and calculations for performing numerical analysis, fluid analysis, reservoir modeling, seismic imaging, and the like, such as known and used in the art.

In the end, reporting features 310 can provide results and reports of the analysis to the end users. These reporting features 310 preferably include plots for displaying information graphically to the end users. Some typical plots for display can include, pressure vs. time, pressure vs. depth, Horner plots, log-log plots, spherical plots, log-log surge plots, and the like, such as known and used in the art. The reporting features 310 can also allow end users to customize plots by scaling, adding/removing curves, etc.

Finally, the access system 150 has data security features 312 and quality control features 314 that help protect user data and control access to the access system 150 and data. Some of the security features 312 include password protections, defined permissions and viewing access, roles, company associations, job associations, etc. The quality control features 314 can be the same as those used for maintaining operations of any server and network system known and used in the art.

### D. Example Use of the System

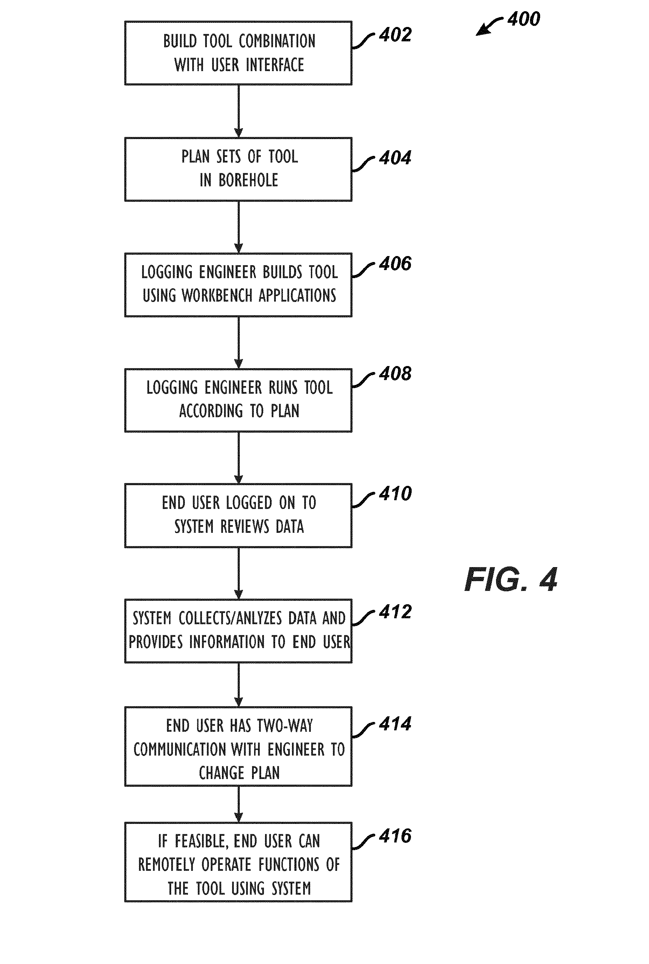

Given the details of the reservoir evaluation system 100 discussed above, a process 400 in Figure 4 shows a typical example of how an end user uses the disclosed reservoir evaluation system 100 and its features. (In the following description, reference is made to the components of Figures 2A-2B to aid description.) Initially, the end user 200 designs a formation testing job using the access system 150 to solve a puzzle of a reservoir, such as determining where fluid contacts are, locations of fluid compartments, permeability of zones, etc. As the end user 200 plans the job, the access system 150 allows the end user 200 to define what tool pieces are needed for the job, the anticipated depths at which to make certain measurements or take samples, and other related matters. These preliminary decisions are based on initial logging, imaging, and other data, and the decisions will likely change at the wellsite depending on the circumstances and what information is obtained during actual operation of the job.

In planning the job, the end user 200 uses user interface applications 184 of the access system 150 and builds a desired combination of components for the formation testing tool 50 to be used for the job (Block 402). This involves the end user 200 assembling arrangements of various modular tool components for performing formation analysis with the tool 50 and is based on what the end user 200 wishes to test and what data they wish to obtain. In addition to working out the details of the tool 50, the end user 200 also plans how the tool 50 is to be set in the wellbore for the various desired tests (Block 404). This involves organizing what tests are to be performed with the various elements of the tool 50 at various times or depths in the wellbore.

Once these planning stages are completed, the job at the wellsite can begin. The logging engineer for the service provider goes to the wellsite and builds the tool 50 using workbench applications 134 according to the end user's plans (Block 406). Various modular features of the tool 50 can be added to a toolstring at this time, and programming of the tool 50 can be performed.

When the scheduled job is ready to begin, the logging engineer then runs the tool 50 according to the end user's plan (Block 408). As the tool 50 is deployed, real-time data is collected and transmitted to the access system 150 as described previously. All the while, the end user 200 can be logged onto the access system 150 remotely over the Internet and can review the data obtained in real time using the preview applications 146 (Block 410). As data is collected with the tool 50, the data is transmitted to the server system 160 as noted previously and stored in the database system 170. The server system 160 then collects and analyzes the data and provides information and results to the end user 200 (Block 412). To produce more comprehensive analysis, the collected data can be associated with the job plan previously designed as well as with other logs by wireline or LWD, seismic information, chemistry data, etc., of the same or similar well bore.

During the job (or after), designated end users 200 with secure access to the job data can then access the data and analysis features. As noted previously, for example, the designated end users 200 can log into the access system 150 during the job and can watch data collected in real time with the preview applications 146. The data is not only shown or displayed to the end user 200, however. Instead, the end users 200 can communicate through the system 100 with the engineer at the wellsite to change the job, work out any problems, resolve artifacts in the data, correct gauge errors, etc. The communication provided can include real time voice communication, videoconferencing, text based "chat," or any other suitable form of communication.

Although some initial analysis is done at the wellsite using the workbench application 134 on a local machine (computer, software, etc.) at the service truck for the tool 50, the access system 150 also performs more comprehensive analysis. The end user 200 can select what analysis for the system 100 to perform. To do this, the end users 200 accesses the system's analysis tools so that the various algorithms and data analysis can be performed remotely on the access system 150 without the user needing to download raw data or analysis tools on their local machines 210.

Of course, in some instances, being able to download data may be useful for an end user 200 so these capabilities may be provided as well. Overall, several end users 200 can view the same job remotely, looking at different sets of data in real time. Likewise, one end user 200 could view data from several jobs at the same time.

As the job continues, the end users 200 have two-way communication with the engineer and can change the preconfigured plans (Block 414). Based on the data obtained and the results of the analysis, for example, the end user may wish to perform new or continued testing outside of what has already been planned. These changes in operation can then be relayed to the engineer at the job to modify the planned operation. In many instances, although the engineer is an expert at formation testing, they may not know exactly what the end user 200 is interested in determining. Therefore, enabling the end user 200 to communicate with the engineer and change the job's plan can achieve more desirable results.

The logging engineer is likely the one person ultimately in charge of the job. Depending on what is to be done, the end user 200 could be permitted to operate something remotely at the wellsite. If feasible, then, the end user 200 may also remotely operate some functions of the tool 50 using the system 100 (Block 416).

### E. User Interface Features

As discussed previously, the evaluation tool 50 can be initially designed for a job by an end user using job planning tools of the access system 150. Using user interfaces, for example, the end user can configure the different sections of the tool 50 to be deployed at the wellsite so the service engineers can set up and program the tool 50 for the desired operation. During the planning, planning software of the user interface can provide the user with schematic images of the wellbore and the tool components for building the desired toolstring and tests, which can have formation testing tools, LWD tools, memory tools, or the like. The various tool components can include nuclear analysis tools, pressure gauges, chemical analysis tool, logging units, straddle packers, sampling tools, etc.

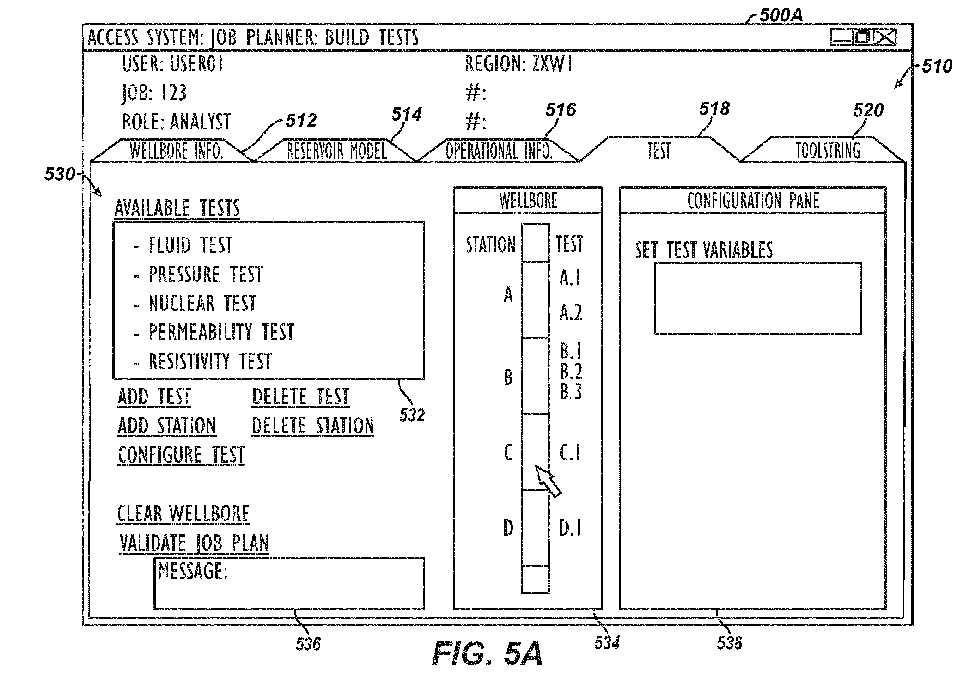

Figures 5A-5B show example graphical user interface screens 500A-B available for an end user of the system 100 to plan a tool and tests for a job. The screens 500A-B have a number of available tabs 510 for entering and configuring plans for the tool and the formation testing to be performed. For example, a wellbore information tab 512 has a data entry screen (not shown) for the end user to enter data about the wellbore, and the reservoir model tab 514 has a data entry screen (not shown) for the end user to enter information about the reservoir. Some of the standard data that can be entered includes casing size, mud properties, wellbore trajectory, expected fluid types and depths, GPS coordinates, expected pressure levels, and other general wellbore and reservoir details.

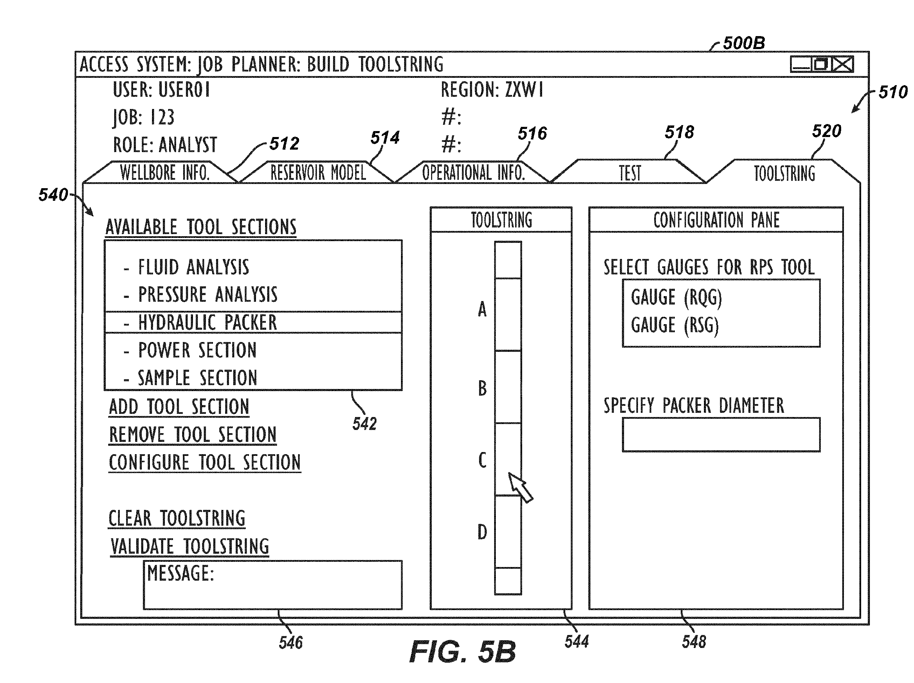

The operational information tab 516 stores data about the operations related to this job. Some of this operational information includes designations of the end users associated with the job, the expected logs, a list of key dates, etc. The test tab 518 has a data entry screen 530 (Fig. 5A) for the user to define and configure a plan for tests to be performed in the wellbore. Finally, the toolstring tab 520 has a data entry screen 540 (Fig. 5B) for the user to define and configure the toolstring.

For example, Figure 5A shows the test tab 518 selected and shows a basic example of a screen 530 in which an end user can define and configure a number of available tests for the job in the wellbore. Various tests 532 can be selected to be performed at various stations (depths, locations, etc.) in the wellbore, which is diagrammatically shown in pane 534. Using the screen 530, the end user can construct the various stations and tests and configure any of the necessary variables for performing the tests and obtaining measurement data. The arranged tests can be validated for proper arrangement, and validation messages 536 can be provided to the end user to verify the arrangement. Also, a configuration pane 538 allows the end user to set variables and other details for the various tests of wellbore to be performed.

In another example, Figure 5B shows the toolstring tab 520 selected and shows a basic example of a screen 540 in which an end user can define and configure the toolstring for a job. Under an "Available Sections" pane 542, the end user can select the various tool sections for the toolstring by clicking on listed sections. Details or other description of the selection can be provided in a details pane (not shown).

When the end user selects a tool section, for example, the section can be added to the toolstring diagrammatically shown in the pane 544 by selecting "Add Tool Section" or by dragging and dropping the selected section. The added tool section will be incorporated into the diagramed toolstring, and any display details of the toolstring will be updated. To verify proper construction of the tool components, a validation message can be updated in a pane 546 on the screen 540 to indicate whether the added tool section can validly be positioned at such a point in the toolstring.

Some of the available tool sections for the formation testing toolstring include fluid analysis systems, straddle packer sections, sampling units, pressure gauges, chemical analysis unit, logging units, etc. By clicking on the added tool section in the toolstring of the pane 544, additional options may be provided in a configuration pane 548 for configuring the tool section. For example, gauges for the added tool section can be selected and assigned serial numbers. For this particular tool section, the end user can also specify the packer diameter and the packer spacer to be associated with this tool section. Of course, the configuration pane 548 would be appropriately adapted for configuring any of the various types of tool sections and their specific requirements.

The diagrammatic image of the toolstring in pane 544 can be updated appropriately with the selected tool section and can be scaled appropriately. If desired, various annotations can be added to the image of the toolstring to display the details or changes to the tool's features. To remove a tool section, the end user can select the tool section in the toolstring and select to "remove tool section" from the available features. The entire toolstring can be cleared, and validation of the toolstring can be manually prompted by the user. The messages 546 associated with the validation can then prompt the user and help them to properly construct their desired toolstring to meet the needs of the planned tests.

### F. Data Structures and Use Cases

As noted previously, the reservoir evaluation system 100 can be used by a number of end users for a number of wellsites. These end users can be from different entities (*i.e.*, companies) so that the access system 100 has set up information (186; Fig. 1) for controlling access to information of certain jobs to certain end users. In addition, the access system 150 is web-based and enables users to design formation testing jobs and to see the results in real time as the tests are run. Because the data is of a highly confidential nature, the access system 150 controls access to the system 150 and the information. Preferably, controlling the access has some flexibility in the approach because different entities using the access system 150 may have varying access requirements. Below is a discussion of system's functionalities and data structures that relate to users, roles, jobs, and permissions.

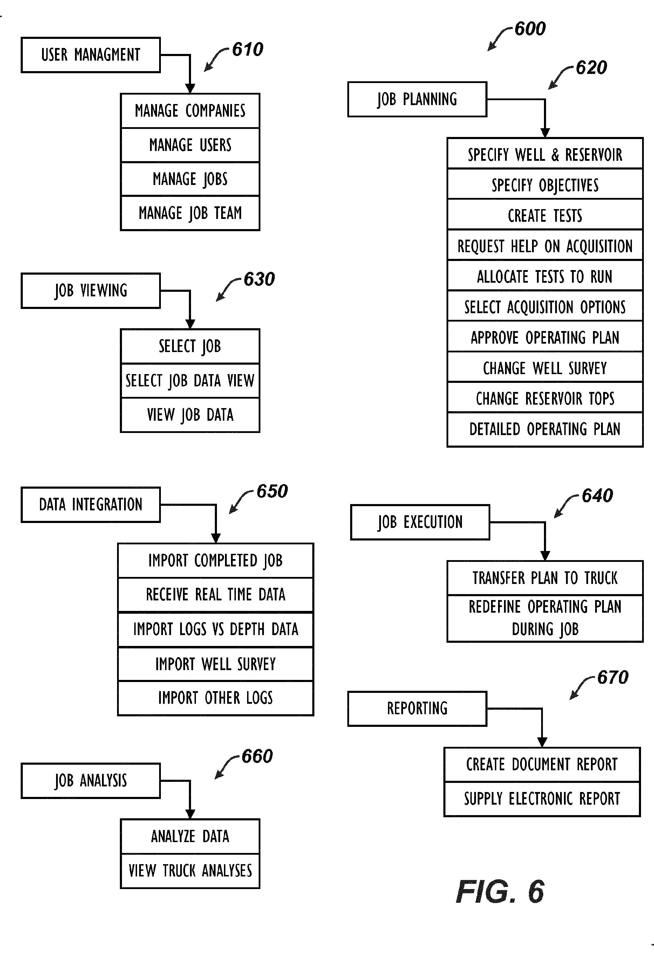

Figure 6 shows various data structures of the disclosed system 100 for handling data, users, roles, and jobs for a variety of companies and wells. In general, these data structures 600 include user management 610, job planning 620, job viewing 630, job execution 640, data integration 650, job analysis 660, and reporting 670.

Under user management 610, different objects for managing information in the system are defined. For example, administrators can create, edit, and delete companies, sub-companies, projects, and users. This also involves creating associations and assignations between these entities. For example, end users are assigned to companies and given roles that control what permissions the user has. The administrators can also create, edit, and delete jobs and assign a team to a given job. The teams can have experts and approvers.

Under job planning 620, the end user can specify the well and the reservoir for a job by entering required information for planning a formation testing operation. As discussed briefly above with reference to Figure 5A, some of the information to be entered includes well data, such as hole sizes, deviation, mud, etc., and includes reservoir data, such as layer depths, layer properties, and fluid depths. In addition to specifying the well and reservoir, the end user enters the objectives for the job given the particular layer(s) and fluid(s) of the reservoir.

After these preliminary steps, the end user can create tests to be performed at the wellsite using the job planning features 620, as discussed previously in Figure 5A, for example. Here, the end user generates an outline operating plan for the formation testing job. In many instances, the tests are generated at a preliminary planning stage before the well is drilled so that logs are not available. Instead of logs, the user can rely on expected layer and fluid tops and bottoms to specify projected numbers, depths, and kinds of tests to perform.

In outlining the tests, the end user can allocate tests to different runs in the well, and each run can have a different toolstring. Outlining a test also involves selecting options for data acquisition. Here, the access system 150 presents the end user with options for the toolstring needed to execute all the tests specified. Using interfaces, the user then builds a toolstring, as discussed previously in Figure 5B, for example. The various conveyance options may also be considered, such as the need to run a pipe-conveyed toolstring.

Once an operating plan is created, the end user seeks approval as to how well the plan will achieve the job requirements. Operators of the service provider can access the system 100 and can obtain details of the job through the system 100. After reviewing the plan, these operators can approve the end user's plan.

After a plan has been made, it can be updated as new information becomes available. When a well survey (*i.e.,* a deviation survey or data from a survey) is changed, for example, the job planning can change the mappings of MD (measured depth) to TVD (true vertical depth) and vice-versa. The end user can also shift reservoir tops and bottoms from depths previously assumed (either from offset wells or from less precise logs like mud logs), to more accurate logs like wireline. When the tops are changed, the test depths are altered based on rules. The tops and bottoms can be for layers, fluids, and perforated intervals in the reservoir.

Once all outlining and changes are done, the end user completes the detailed operating plan. To do this, the user can enter test parameters and visualize the job plan in terms of grouped tests at stations and the tool operations (*i.e.,* schedule of events for each station) supporting the tests. This testing and visualization can be done after well logs have been acquired so that more exact depths for stations can be used based upon the logs. Using the testing and visualization, the end user can edit the exact station depths for all tests at a station. Stations and tests contained within them can be deleted, but new stations and test cannot be added because new data must be obtained from a new test run.

Once a detailed operating plan is created, the plan can go through another approval for transfer to the data acquisition unit 110 (*i.e.*, truck) so the job can be run at the wellsite. For approval, the system 150 can contact various designated users, who then review the detailed operating plan to approve it.

Under job viewing 630, the end user can select a job to view as long as they have permission. Viewing may involve simply displaying a summary line of information about each job in more detail. From this, the end user can select job data to view and analyze a particular job. A tree structure can be used to navigate the sub-data objects of the job, such as the test run, particular station, type of test, and the analyses of these. Presentation of the data can include summary lists, tables, plots, and any other suitable form of graphical presentation to the end user.

Under job execution 640, the system transfers the operating plan to the data acquisition unit 110 (*i.e.*, logging truck). Transfer can occur either (i) before the start of a logging job or (ii) during a logging job when the plan needs to be updated. In such updating, the access system 150 can refine a detailed operating plan during execution of the job. These refined details can be passed to the unit's workbench application 134 to become the plan for the remainder of the current acquisition of data.

After a completed or during a job in progress, data is uploaded to the access system 150 using data integration 650. Here, various forms of importing and data conversion may be used so that acquired data from the tool 50 can be loaded into the access system 150. The data can be imported in particular file formats that consists of time series or depth series formation test data plus supporting meta data and job data as discussed previously.

Features can be triggered when real time data is received so that streaming pressure and other measures acquired during the job can be handled and stored automatically by the data acquisition server 162. In general, the data can be time series data, depth based information, well surveys (deviation surveys), and the like, and the data can be in a variety of formats, such as DPK, WITSML, ASCII, etc.

With data loaded and stored, job viewing 630 can be used as noted previously, and job analysis 650 offers features to the end user for analyzing the data. Here, the end user can create new analyses, based on what kind of test, station, or job data they have present. The system 150 then provides analysis screens for interactive analysis and allows for storage of results, and subsequent viewing.

As part of the viewing options, the end user can view the preliminary analysis by seeing any workbench-generated analyses. The raw analysis can be display in the same GUI screens as the system's analyses for comparative purposes. However, the system's analysis can be display with more comprehensively filled fields filled and can be interactive.

Under reporting 670, the end user can create document reports in desirable formats with desirable functions. These reports can be physical printouts or electronic reports. An external application can request or be supplied with such electronic reports when interacting with the system 150, and these external applications can be WITSML/PRODML web services.

### G. Permission Hierarchy

As noted previously, end users have a number of access and viewing permissions to access and view details and data of various jobs with the access system 150. A job can have several end users assigned to it, and each of these end users can have a specific job function, which defines a minimum set of required permissions for the assigned end user to carry out the tasks associated with job.

To access the system 150, the end user requires a login, and each user can be assigned as a member of one or more particular companies or groups. The various companies can be arranged in hierarchies of various parent companies and sub-companies of the parent company. The various companies can be fixed to a specific list of regions in which that entity can operate, and the specific region may also be used within the system 150 for deciding on display options for end user of the companies. When a job is set up, a single region is selected. A user may be able to see other jobs within their company, where they are not assigned a specific job function, depending on company permissions and the type of job.

When a user logs in, jobs for which they have an assigned job function are displayed separately from those which they are able to see without an assigned job function. A job is defined as a unit of work assigned to exactly one company, sub-company, or project, and a given job and can represent one or more runs or tests performed with tools 50 in a wellbore. To simplify data management, each job is preferably assigned to a single wellbore, although one or more wellbores can be assigned to a well.

Permissions for end users can be grouped into permission sets or roles, and permission can have any desired amount of granularity to control the viewing, editing, creating, deleting, and other functions available to particular end users on the system 150. Within a given role, for example, certain permissions may be granted or denied. An end user's membership in a particular role as well as any individually assigned permissions can have expiration dates associated with them.

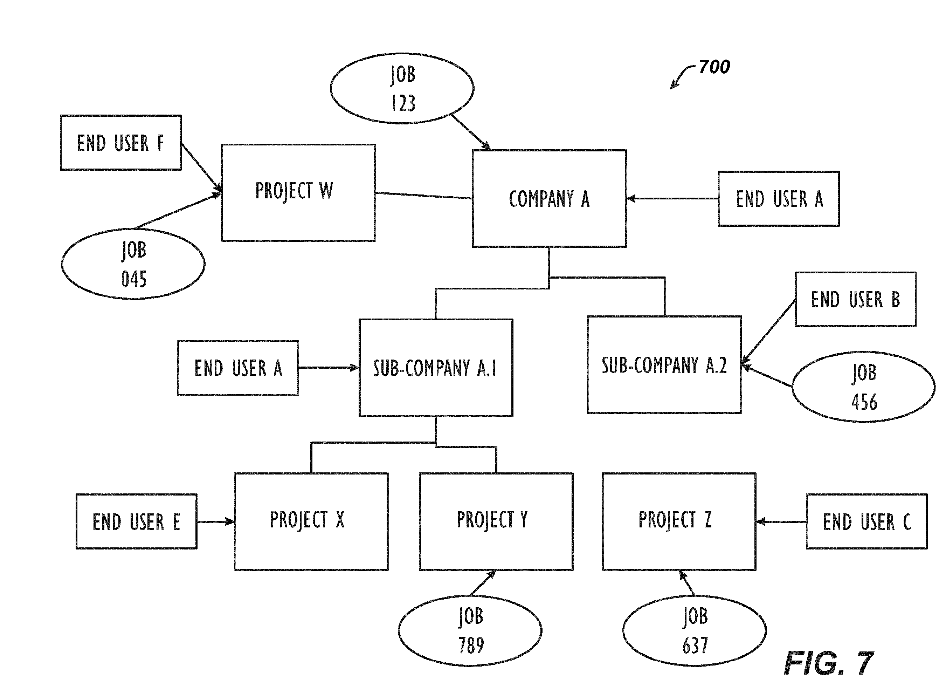

Figure 7 shows an example arrangement 700 of companies, sub-companies, projects, jobs, and end users to help illustrate the security and permission features of the disclosed system 150. As shown, end user A is a member of company A directly. Therefore, end user A can access all the jobs assigned to company A whether they are assigned directly to the company or indirectly through a sub-company or through a project of company A. End user B is a member of sub-company A.2. Therefore, end user B can access job 456 directly assigned to the sub-company A.2, but he can also access job 637 because it belongs to a project of sub-company A.2.

By contrast, end user C is a member of Project Z so that he can only access Job 637. End user D is a member of sub-company A.1 so he can access job 789 assigned to a project of sub-company A.1. End user E is a member of Project X so he cannot access any jobs. Finally, end user F is a member of Project W so he can access job 045. User F can be invited to view job 637 by end user C only if end user C has the correct permissions. However, end user F will not be able to see any other projects.

As can be seen by the example in Figure 7, the permission arrangement for the access system 150 is preferably flexible so that various relationships between users, companies, roles, and jobs can be configured. In this way, only those who have permission to see particular data can have access, or users are only shown data that they need to see based on their job functions or roles.

The techniques of the present disclosure can be implemented in digital electronic circuitry, or in computer hardware, firmware, software, or in combinations of these. Apparatus for practicing the disclosed techniques can be implemented in a computer program product tangibly embodied in a machine-readable storage device for execution by a programmable processor; and method steps of the disclosed techniques can be performed by a programmable processor executing a program of instructions to perform functions of the disclosed techniques by operating on input data and generating output. As such, the disclosed techniques can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language.

Suitable processors include, by way of example, both general and special purpose microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits).

The foregoing description of preferred and other embodiments is not intended to limit or restrict the scope or applicability of the inventive concepts conceived of by the Applicants. In exchange for disclosing the inventive concepts contained herein, the Applicants desire all patent rights afforded by the appended claims. Therefore, it is intended that the appended claims include all modifications and alterations to the full extent that they come within the scope of the following claims or the equivalents thereof.

## Claims

1. A reservoir evaluation method, comprising:
defining a plan on a server system for conducting a formation test with a toolstring in a well bore at a remote wellsite;
obtaining data at the server system via a first communication link with the remote wellsite, the data measured from the formation test conducted with the toolstring at the remote wellsite;
producing analysis by processing the obtained data at the server system; and
providing remote access of an end user to the obtained data and the produced analysis via a second communication link with the server system.

2. The method of claim 1, further comprising transmitting the plan from the server system to the remote wellsite via the first communication link; and optionally further comprising altering the plan transmitted from the server system to the remote wellsite while the data is measured in real-time.

3. The method of claims 1 or 2, wherein the first communication link comprises a satellite link between the remote wellsite and the server system; and optionally wherein the second communication link comprises an wide area network link between the end user and the server system.

4. The method of any one of claims 1 to 3, wherein providing remote access of the end user comprises defining access permission for the end user to access the obtained data and the produced analysis.

5. The method of any one of claims 1 to 4, wherein producing analysis comprises performing the analysis based on selections made by the end user with remote access to the server system.

6. The method of any one of claims 1 to 5,
wherein obtaining data at the server system via the first communication link with the remote wellsite comprises receiving the data in real time during the formation test with the toolstring in the wellbore at the remote wellsite; or wherein obtaining data comprises storing the data.

7. The method of any one of claims 1 to 6, wherein defining the plan comprises:
constructing one or more tests to perform in the wellbore by interacting a user interface with the end user; or
constructing one or more components of the toolstring for the wellbore by interacting a user interface with the end user.

8. A reservoir evaluation system, comprising:
communication equipment receiving data measured from remote wellsites;
a database system in communication with the communication equipment and storing the received data in one or more databases;
a network interface system establishing secure communication with end users via one or more networks;
a server system having one or more servers in communication with the database system and the network server system, the server system being configured to:
define plans for conducting formation tests with toolstrings in wellbores at the remote wellsites,
obtain the data measured from the formation tests conducted with the toolstrings at the remote wellsites,
process the obtained data to produce analysis, and
provide remote access of the end users to the obtained data and the produced analysis via the network interface system.

9. The system of claim 8, wherein the server system is configured to transmit the plans from the server system to the remote wellsites via the first communication link; and optionally wherein the server system is configured to alter the plans transmitted from the server system to the remote wellsites while the data is measured in real-time.

10. The system of claim 8 or 9, wherein the first communication link comprises a satellite link between the remote wellsites and the server system; and optionally wherein the second communication link comprises an wide area network link between the end users and the server system.

11. The system of any one of claims 8 to 10, wherein to provide remote access of the end user, the server system is configured to define access permission for the end user to access the obtained data and the produced analysis.

12. The system of any one of claims 8 to 11, wherein to produce analysis, the server system is configured to perform the analysis based on selections made by the end user with remote access to the server system.

13. The system of any one of claims 8 to 12,
wherein to obtain data at the server system via the first communication link with the remote wellsite, the server system is configured to receive the data in real time during the formation test with the toolstring in the wellbore at the remote wellsite; or
wherein to obtain data, the server system is configured to store the data.

14. The system of any one of claims8 to 13,
wherein to define the plan, the server system comprises a user interface interacting with the end users via the network interface system to construct one or more tests to perform in the wellbore; or
wherein to define the plan, the server system comprises a user interface interacting
with the end users via the network interface system to construct one or more components of the toolstring for the wellbore.
